Europäisches Patentamt

(19) European Patent Office

Office européen des brevets

(11) Numéro de publication: **0 218 599**
**B1**

(12) **FASCICULE DE BREVET EUROPEEN**

(45) Date de publication du fascicule du brevet:
26.07.89

(21) Numéro de dépôt: 86901084.3

(22) Date de dépôt: 04.02.86

(86) Numéro de dépôt international:
PCT/FR 86/00030

(87) Numéro de publication internationale:
WO 86/04534 (14.08.86 Gazette 86/18)

(51) Int. Cl.⁴: **B 23 K 26/08**

(54) **PROCEDE ET DISPOSITIF DE DEPLACEMENT DU POINT D'IMPACT D'UN FAISCEAU LASER SUR UNE PIECE.**

(30) Priorité: 05.02.85 FR 8501586

(43) Date de publication de la demande:
22.04.87 Bulletin 87/17

(45) Mention de la délivrance du brevet:
26.07.89 Bulletin 89/30

(84) Etats contractants désignés:
AT BE CH DE FR GB IT LI LU NL SE

(56) Documents cités:
EP-A- 0 055 463
FR-A- 2 271 683

(73) Titulaire: **BERTIN & CIE, Zone Industrielle Boîte postale 3, F-78373 Plaisir Cédex (FR)**

(72) Inventeur: **PAVLIN, Cyrille, 1, chemin de la Maladrerie, Rosay F-78790 Septeuil (FR)**

(74) Mandataire: **Ramey, Daniel, Cabinet Ores 6 Avenue de Messine, F-75008 Paris (FR)**

## Description

L'invention concerne un procédé et un dispositif de déplacement du point d'impact d'un faisceau laser sur une pièce.

Les applications des faisceaux laser dans l'industrie sont de plus en plus nombreuses et diverses, les faisceaux laser étant utilisés notamment pour la découpe, le marquage, la soudure de pièces, les traitements de surfaces, etc.

Le faisceau laser est en général dirigé sur un miroir qui le renvoi sur une lentille de focalisation interposée entre le miroir et la pièce à traiter. Le déplacement du point d'impact du faisceau laser sur la pièce, selon une trajectoire prédéterminée, est obtenu soit par déplacement de l'ensemble miroir-lentille de focalisation par rapport à la pièce, soit par déplacement de la pièce et de son support par rapport à l'ensemble miroir-lentille.

Dans les deux cas, les masses à déplacer sont relativement importantes et ont une certaine inertie, ce qui limite grandement l'accélération et la vitesse de déplacement du faisceau laser par rapport à la pièce, surtout lorsque la trajectroire du point d'impact comprend des zones à faible rayon de courbure. Ce ralentissement se traduit par des risques de brûlure de la pièce, et par une perte de temps qui fait que l'utilisation d'un faisceau laser n'est plus concurrentielle vis à vis des dispositifs classiques de découpe ou de marquage.

On connaît également, par le document EP-A2-0 055 463, un dispositif de chauffage d'une pièce, selon lequel un faisceau laser est réfléchi en direction de la pièce par un miroir que l'on fait vibrer parallèlement à l'axe de la pièce, de façon à chauffer uniformément une partie prédéterminée de la pièce, avec une distribution de température sensiblement uniforme. Ces moyens connus ne permettent cependant pas d'accélérer le déplacement du point d'impact d'un faisceau laser sur une partie à très faible rayon de courbure d'une trajectoire prédéterminée.

L'invention a pour objet un procédé et un dispositif de déplacement d'un faisceau laser, qui ne présentent pas ces inconvénients et qui permettent de déplacer le point d'impact d'un faisceau laser sur une pièce avec des accélérations très supérieures à celles que l'on pouvait obtenir auparavant, en particulier lorsque la trajectoire du point d'impact comprend des zones à très faible rayon de courbure.

L'invention a également pour objet un procédé et un dispositif permettant de déplacer un faisceau laser selon une trajectoire prédéterminée avec une précision très supérieure à ce que l'on pouvait obtenir auparavant.

Le procédé selon l'invention, qui consiste à diriger le faisceau laser sur la pièce au moyen d'un miroir qui est monté à pivotement sur un support autour d'un axe contenu dans son plan et passant par son centre, et à déplacer le support du miroir ou le support de la pièce l'un par rapport à l'autre, selon un mouvement prédéterminé correspondant approximativement à la trajectoire désirée du point d'impact du faisceau sur la pièce, est caractérisé en ce qu'il consiste à monter le miroir en pivotement sur son support autour d'un autre axe de rotation contenu dans son plan et croisant perpendiculairement le premier axe cité au centre du miroir, à déterminer un mouvement de faible amplitude du miroir autour de ces deux axes, et à superposer ce mouvement de faible amplitude au mouvement relativ précité du support du miroir et du support de la pièce, pour obtenir la trajectoire précise souhaitée du point d'impact du faisceau laser sur la pièce.

De préférence, le miroir est suspendu en son centre par attraction magnétique, sans frottement au moyen d'un coussin d'air et on commande son mouvement autour des axes précités par variation du courant circulant dans des bobines qui sont placées dans un champ magnétique fixe et fixées sur le miroir en des points situés sur les axes de rotation précités.

L'invention propose également un dispositif de déplacement du point d'impact d'un faisceau laser sur une pièce, comprenant un miroir de réflexion du faisceau laser, monté pivotant sur un support autour d'un axe de rotation contenu dans son plan et passant par son centre, et des moyens pour déplacer le support du miroir ou le support de la pièce l'un par rapport à l'autre selon un mouvement correspondant approximativement à la trajectoire désirée du point d'impact du faisceau laser sur la pièce, caractérisé en ce que le miroir est monté en pivotement par rapport au support autour d'un autre axe de rotation contenu dans son plan et croisant perpendiculairement le premier axe cité au centre du miroir, et en ce que des moyens sont prévus pour déplacer le miroir autour de ces deux axes selon un mouvement de faible amplitude qui est superposé au mouvement relatif précité du support du miroir ou du support de la pièce, pour l'obtention de la trajectoire précise souhaitée du point d'impact du faisceau laser sur la pièce.

L'invention permet donc de déterminer une trajectoire moyenne du point d'impact d'un faisceau laser sur une pièce, cette trajectoire moyenne ne comprenant pas de portion de très faible rayon de courbure, et de superposer à cette trajectoire moyenne un mouvement de faible amplitude du point d'impact du faisceau laser sur la pièce, pour obtenir exactement la trajectoire désirée du point d'impact du faisceau laser. Ce déplacement de faible amplitude est obtenu par rotation du miroir de renvoi, qui a une masse très faible et un moment d'inertie également très faible par rapport à son centre ou par rapport à des axes de rotation se croisant en son centre. L'accélération du point d'impact du faisceau laser sur la pièce, dans ce mouvement de faible amplitude, peut être très supérieure à celle de son mouvement sur la trajectoire moyenne précitée.

On obtient ainsi une trajectoire beaucoup plus précise du faisceau laser sur la pièce, tout en évitant les risques de brûlure et les ralentissements constatés dans la technique antérieure.

Le mouvement de faible amplitude que l'on superpose à la trajectoire moyenne précitée peut être un mouvement alternatif, permettant de réduire l'effet de nuage de plasma qui tend à diminuer la puissance de coupe du faisceau laser, ou bien permettant d'éviter le refroidissement brusque d'une soudure, etc.

Dans la description qui suit, faite à titre d'exemple, on se réfère aux dessins annexés, dans lesquels:

— la figure 1 est une vue schématique en coupe axiale d'un ensemble miroir de renvoi-lentille de focalisation faisant partie d'un dispositif selon l'invention;

— la figure 2 est une vue de dessous du miroir de renvoi, associé à un dispositif de maintien sans contact;

— la figure 3 est une vue en plan de ce miroir et de son dispositif de maintien;

— la figure 4 représente schématiquement un circuit de commande de déplacement du miroir de renvoi;

— la figure 5 est une vue semblable à la figure 1, mais pour une variante de réalisation;

— la figure 6 représente schématiquement une autre variante de réalisation.

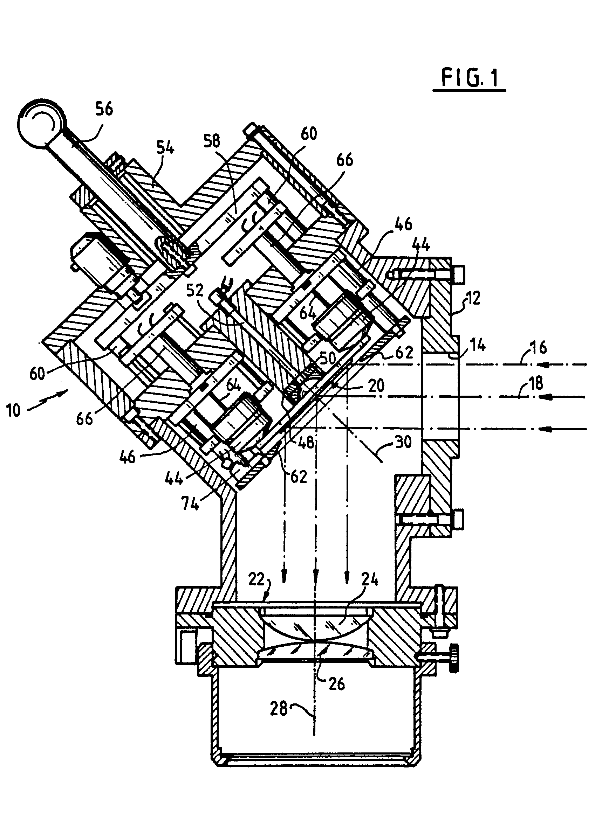

On se réfère d'abord à la figure 1, qui est une vue schématique en coupe axiale du support d'un ensemble miroir de renvoi lentille de focalisation dans un dispositif selon l'invention.

Ce support comprend un bâti ou châssis 10 dont une paroi 12 présente une ouverture 14 à travers laquelle un faisceau laser 16 d'axe 18 est dirigé sur un miroir 20 incliné à 45° sur l'axe 18, qui renvoie le faisceau laser sur un dispositif optique de focalisation 22 comprenant deux lentilles convexes 24 et 26 dont l'axe optique 28 est perpendiculaire à l'axe 18 précité. Le faisceau laser qui traverse le dispositif optique 22 est focalisé par les lentilles 24 et 26 sur une pièce quelconque, non représentée, placée sur un support situé sous le dispositif optique 22, sur l'axe 28 de celui-ci. Comme indiqué plus haut, une trajectoire moyenne du point d'impact du faisceau laser sur la pièce est obtenue soit par déplacement du support de la pièce par rapport au bâti ou châssis 10, soit par déplacement de ce bâti par rapport à la pièce à traiter. Comme la masse et le moment d'inertie de la pièce et de son support ou du bâti 10 sont relativement importants, l'accélération maximale du point d'impact du faisceau laser sur la pièce ne peut dépasser 3 g, ce qui conduit à des vitesses de déplacement de ce point d'impact qui peuvent être très faibles si la trajectoire comprend des parties de faible rayon de courbure.

Pour augmenter dans une très large mesure l'accélération du point d'impact du faisceau laser sur les parties de faible rayon de courbure de sa trajectoire, l'invention prévoit de monter le miroir de renvoi 20 mobile en rotation autour de deux axes perpendiculaires qui se croisent en son centre, et qui sont perpendiculaires à un axe 30 passant par le centre du miroir perpendiculairement à la surface optique de celui-ci.

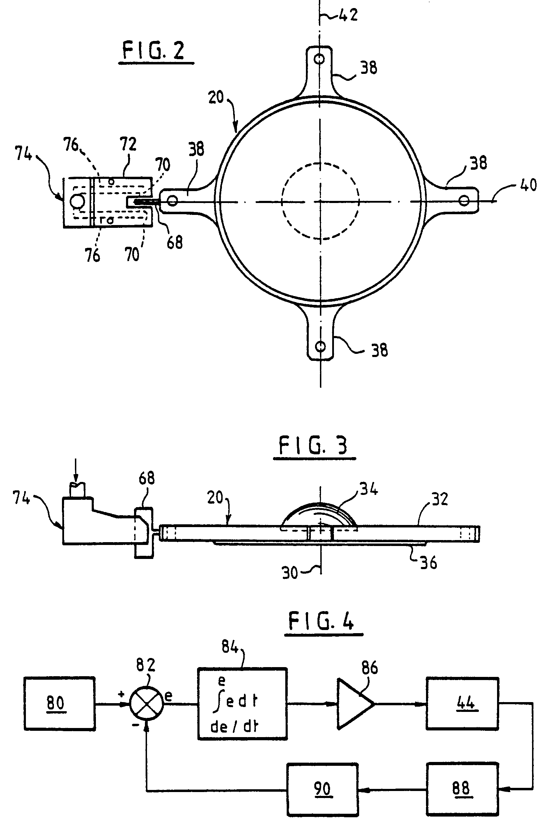

Pour cela, (fig. 2), la face arrière 32 (opposée à la face optique de réflexion) du miroir 20 est munie, en son centre, d'une rotule en acier 34, en forme de demi-sphère, dont le centre coïncide avec le centre de la face optique 36 du miroir. Celui-ci comprend également quatre bras radiaux 38, répartis à sa périphérie à 90° les uns des autres, et s'étendant le long de deux axes perpendiculaires 40 et 42 qui se croisent au centre du miroir et constituent les axes de rotation de celui-ci.

Sur chaque bras 38 est fixée, à distance égale du centre du miroir, une bobine 44 d'axe parallèle à l'axe 30 précité et qui coopère avec une armature magnétique 46 portée par le bâti 10 et comprenant un noyau orienté parallèlement à l'axe 30 et engagé à l'intérieur de la bobine 44. Deux bobines 44 montées sur deux bras radiaux 38 diamétralement opposés sont reliées électriquement en opposition, de telle sorte que le même courant passe dans les deux bobines, en circulant dans un sens dans une bobine et dans l'autre sens dans l'autre bobine, et que les forces électromagnétiques développées sur les deux bras radiaux 38 diamétralement opposés aient des intensités égales et des directions opposées parallèles à l'axe 30, pour éviter l'application d'un effort tranchant au miroir 20.

Ce dernier est suspendu dans le bâti 10 au moyen de la rotule semi-sphérique 34 qui est reçue dans une cavité de forme correspondante formée à l'extrémité d'un montant central 48 du bâti 10 qui comprend, au voisinage de cette extrémité, un aimant permanent 50 (ou une bobine parcourue par un courant électrique) agissant sur la rotule 34 par attraction magnétique. Pour éviter ou au moins réduire les frottements entre la rotule 34 et son logement de l'extrémité du montant 48, un passage axial 52 est formé dans le montant 48 et est relié par une extrémité à une source d'air sous pression (non représentée), son autre extrémité débouchant au centre du logement de la rotule 34, de telle sorte que le soufflage d'air dans ce logement forme un coussin d'air entre la rotule 34 et la surface interne de son logement, ce qui permet de réduire dans une très large mesure les frottements lors de la rotation du miroir 20 autour des axes 40 et 42, et également de refroidir le miroir dans le cas d'utilisation d'un faisceau laser de forte puissance.

La partie supérieure du bâti 10 comprend un manchon axial 54 dans lequel est montée une colonne à billes 56 déplaçable le long de l'axe 30 dans le manchon 54. La partie inférieure de la colonne 56 est reliée par une plaque 58 à deux bras 60 dont les extrémités inférieures portent une couronne 62 s'étendant sous le miroir 20 parallèlement à celui-ci. La couronne 62 forme un bouclier et évite l'impact direct du faisceau laser sur les parties sensibles du montage. De plus, le déplacement de la colonne 56 le long de l'axe 30 permet, par appui de la couronne 62 sur la périphérie du miroir 20, de déterminer une position de référence du miroir, qui est alors incliné exactement à 45° sur l'axe 18 du faisceau laser 16, ainsi qu'une position de référence des capteurs de rotation du miroir 20 autour des axes 40 et 42.

Ces capteurs peuvent être de tout type approprié: on peut par exemple envoyer sur le miroir un rayon lumineux qui est réfléchi sur des cellules analogiques du type à quatre quadrants. On peut également utiliser quatre capteurs inductifs de déplacement linéaire, qui sont associés chacun à une bobine 44 et qui comprennent une tige 64 s'étendant axialement dans la bobine 44 et fixée avec celle-ci par une extrémité sur une extrémité du bras 38 correspondant du miroir 20. A son extrémité opposée, la tige 64 est guidée en déplacement rectiligne alternatif à l'intérieur d'un cylindre 66 qui constitue l'élément fixe du capteur, dont l'élément mobile est porté par la tige 64 à l'intérieur du cylindre 66. Les déplacements linéaires des éléments mobiles de ces capteurs correspondent aux rotations du miroir 20 autour de ces axes 40 et 42.

Le miroir 20 est encore associé à des moyens empêchant sa rotation autour de l'axe 30. Ces moyens peuvent être constitués par exemple, comme représenté dans les figures 2 et 3, par une palette 68 portée par un bras 38 du miroir 20 et s'étendant entre deux trous opposés 70 de soufflage d'air, qui sont formés dans les deux bras parallèles 72 d'une pièce 74 comprenant des canaux 76 d'alimentation des trous 70 en air comprimé. Les jets d'air sortant des trous 70 viennent frapper perpendiculairement la plaque 68 et maintiennent celle-ci à mi-distance entre les trous 70, en empêchant ainsi la rotation du miroir 20 autour de l'axe 30.

Le dispositif qui vient d'être décrit fonctionne de la façon suivante:

La rotule 34 du miroir 20 est suspendue sur le coussin d'air par attraction magnétique dans son logement hémisphérique de l'extrémité du montant 48 du châssis 10. Une variation du courant électrique passant dans deux bobines 44 reliées en opposition provoque une variation de la force électromagnétique développée par ces bobines 44 avec les armatures associées 46 et donc une rotation du miroir 20 autour de l'axe passant par les deux autres bobines 44.

Les rotations du miroir 20 autour des axes 40 et 42, qui sont de très faible amplitude (de l'ordre de quelques degrés au maximum) provoquent des mouvements de faible amplitude du point d'impact du faisceau laser sur la pièce à traiter, mouvements de faible amplitude qui sont superposés à la trajectoire moyenne de ce point d'impact qui est obtenue par déplacement du châssis 10 par rapport à la pièce ou par déplacement de la pièce et de son support par rapport au châssis 10. La masse relativement très faible du miroir, son faible moment d'inertie par rapport aux axes de rotation 40 et 42 et la suppression des frottements grâce au coussin d'air entre la rotule 34 et son logement hémisphérique, permettent de déplacer le point d'impact du faisceau avec des accélérations qui peuvent atteindre des valeurs comprises entre 10 et 30 g ou plus.

Les variations des courants électriques alimentant les bobines 44 sont produites de préférence par un circuit de commande tel que celui représenté schématiquement en figure 4, qui comprend un générateur 80 de fonctions analogiques dont la sortie est reliée à l'entreé + d'un circuit sommateur 82. La sortie de ce circuit sommateur est reliée à l'entrée d'un réseau correcteur 84, qui est par exemple du type proportionnelle-intégrale-dérivée dont la sortie est reliée par un amplificateur 86 aux bobines 44. La sortie de ces bobines est reliée à l'entrée − du sommateur 82 par une impédance mécanique formée par l'inertie du miroir 20, les frottements et la raideur de sa suspension, et par un circuit 90 prenant en compte les signaux produits par les capteurs de rotation associés au miroir 20. Le réseau correcteur 84 permet de réduire et d'annuler le signal e représentant la différence entre le signal émis par le générateur de fonction analogique et le signal représentant le mouvement réel du miroir 20.

De préférence, le centre de la face optique du miroir 20 est situé sur le foyer du dispositif optique de focalisation, de sorte que le faisceau laser réfléchi et focalisé reste perpendiculaire à la pièce à traiter.

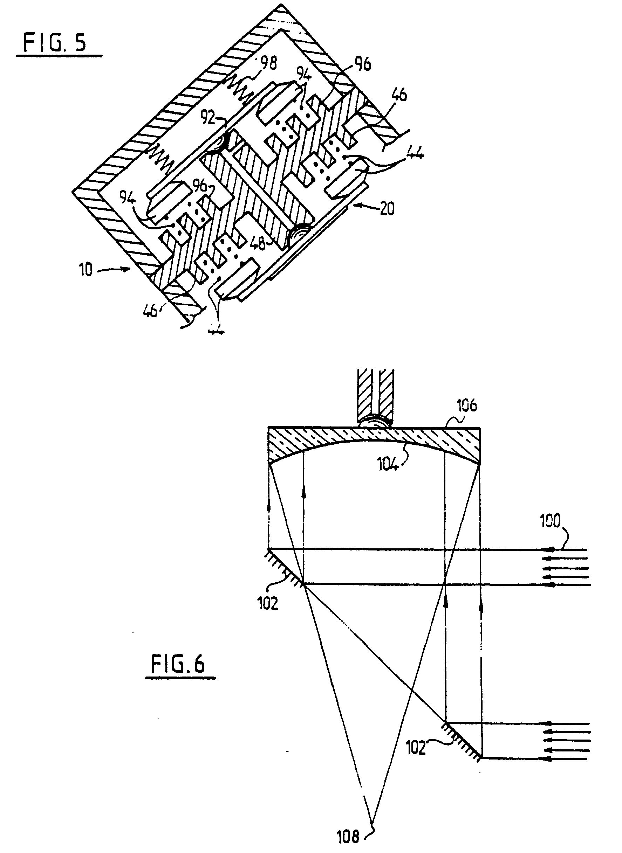

On se réfère maintenant à la figure 5 représentant schématiquement une variante de réalisation selon laquelle le bâti 10 contient des moyens d'équilibrage dynamique de l'ensemble mobile constitué par le miroir 20 et ses bobines 44. Ces moyens sont formés par un ensemble mobile symétrique de l'ensemble précité, comprenant un faux miroir 92, identique au miroir 20, mais dépourvu de face optique, sur la périphérie duquel sont fixées quatre bobines 94 identiques aux bobines 44 et alignées axialement avec celles-ci. Chaque bobine 94 est reliée électriquement en opposition à la bobine 44 avec laquelle elle est alignée et coopère avec une armature 96 symétrique de l'armature 46. Des moyens 98 de rappel à ressort sont associés au faux miroir 92 et tendent à le ramener automatiquement dans sa position moyenne. Comme le miroir 20, le faux miroir 92 comprend une rotule centrale par laquelle il est suspendu sur coussin d'air à l'extrémité supérieure du montant 48.

En fonctionnement, le faux miroir 92 subit des forces d'accélération égales et opposées à celles du miroir 20, ce qui permet d'annuler les effets, sur les moyens de support du miroir, des mouvements de ce dernier et d'éviter les vibrations de ces moyens de support.

Le miroir 20 peut avoir une face optique plane comme représenté dans les figures 1 et 5, ou bien une face optique concave, si nécessaire. Il est même possible de supprimer les lentilles de focalisation en utilisant un montage par exemple du type Cassegrain et un faisceau laser incident annulaire, comme représenté en figure 6.

Dans cette figure, le faisceau laser incident 100 est à section annulaire et est renvoyé par un miroir annulaire plan 102 sur la face optique concave 104 d'un miroir 106 correspondant au miroir 20. Le faisceau réfléchi par cette face optique 104 est focalisé en 108.

**Revendications**

1. Procédé de déplacement du point d'impact d'un faisceau laser sur une pièce, consistant à diriger le faisceau laser sur la pièce au moyen d'un miroir (20) qui est monté à pivotement sur un support (10) autour d'un axe (40) ou (42) contenu dans son plan et passant par son centre, et à déplacer le support (10) du miroir (20) ou le support de la pièce l'un par rapport à l'autre selon un mouvement prédéterminé correspondant approximativement à la trajectoire désirée du point d'impact du faisceau sur la pièce, caractérisé en ce qu'il consiste à monter le miroir (20) en pivotement sur son support (10) autour d'un autre axe de rotation (42) ou (40) contenu dans son plan et croisant perpendiculairement le premier axe cité (40) ou (42) au centre du miroir, à déterminer un mouvement de faible amplitude du miroir (20) autour de ces deux axes, et à superposer ce mouvement de faible amplitude au mouvement relatif précité du support (10) du miroir ou du support de la pièce, pour obtenir la trajectoire précise souhaitée du point d'impact du faisceau laser sur la pièce.

2. Procédé selon la revendication 1, caractérisé en ce qu'il consiste à suspendre le miroir (20) en son centre par attraction magnétique, sans frottement au moyen d'un coussin d'air, et à commander son mouvement de rotation autour des axes (40, 42) précités par variation du courant électrique circulant dans des bobines (44) fixées sur le miroir (20) en des points situés sur ces axes de rotation (40, 42) et placées dans un champ magnétique fixe.

3. Dispositif de déplacement du point d'impact d'un faisceau laser sur une pièce, comprenant un miroir (20) de réflexion du faisceau laser, monté pivotant sur un support (10) autour d'un axe de rotation (40) ou (42) contenu dans son plan et passant par son centre, et des moyens pour déplacer le support (10) du miroir (20) ou le support de la pièce l'un par rapport à l'autre selon un mouvement correspondant approximativement à la trajectoire désirée du point d'impact du faisceau laser sur la pièce, caractérisé en ce que le miroir est monté en pivotement, par rapport au support (10), autour d'un autre axe de rotation (42) ou (40) contenu dans son plan et croisant perpendiculairement le premier axe cité (40) ou (42) au centre du miroir, et en ce que des moyens (44, 81) sont prévus pour déplacer le miroir (20) autour de ces deux axes selon un mouvement de faible amplitude qui est superposé au mouvement relatif précité du support de miroir ou du support de la pièce pour l'obtention de la trajectoire précise souhaitée du point d'impact du faisceau laser sur la pièce.

4. Dispositif selon la revendication 3, caractérisé en ce que le miroir (20) est pourvu en son centre d'une rotule (34) de suspension du type à coussin d'air, qui est soumise à une attraction magnétique.

5. Dispositif selon la revendication 3 ou 4, caractérisé en ce que le miroir (20) est associé à des moyens (68, 74) interdisant sa rotation autour d'un axe (30) perpendiculaire aux axes de rotation (40, 42) précités.

6. Dispositif selon l'une des revendications 3 à 5, caractérisé en ce que le miroir (20) comprend quatre bras (38) s'étendant deux à deux le long des axes de rotation (40, 42) et sur lesquels sont fixées, symétriquement, des bobines (44) d'axes perpendiculaires aux axes de rotation, qui sont mobiles par rapport à des armatures fixes (46) portées par le support (10) du miroir.

7. Dispositif selon la revendication 6, caractérisé en ce que deux bobines (44) montées sur le même axe de rotation du miroir sont reliées ensemble, en opposition, à un circuit de commande électrique.

8. Dispositif selon l'une des revendications 3 à 7, caractérisé en ce qu'il comprend des moyens de mesure des angles de rotation du miroir autour des axes (40, 42) précités.

9. Dispositif selon la revendication 8, caractérisé en ce que les moyens de mesure d'angle sont des capteurs (66) de déplacement linéaire comprenant un élément mobile guidé le long d'un axe perpendiculaire aux deux axes de rotation du miroir et porté par une tige (64) qui s'étend axialement à travers une bobine (44) et est fixée avec celle-ci sur le miroir (20).

10. Dispositif selon la revendication 7, caractérisé en ce que le circuit de commande électrique comprend un générateur de fonctions analogiques (80) associé à un réseau correcteur (84) qui est par exemple du type proportionnelle-intégrale-dérivée.

11. Dispositif selon l'une des revendications 3 à 10, caractérisé en ce qu'il comprend des moyens d'équilibrage dynamique de l'ensemble mobile formé par le miroir (20) et ses moyens (44) de déplacement, ces moyens d'équilibrage étant constitués par un ensemble mobile (92, 94) symétrique de l'ensemble mobile (20, 44) précité et comprenant des moyens de déplacement identiques à ceux du miroir (20), mais montés en opposition par rapport à ces derniers.

## Patentansprüche

1. Verfahren zum Verschieben des Auftreffpunktes eines Laserstrahles auf einem Werkstück, bei welchem der Laserstrahl auf das Werksktück mittels eines Spiegels (20) gelenkt wird, der auf einem Träger (10) zum Schwenken um eine Achse (40) oder (42) montiert ist, welche in dessen Ebene und durch dessen Mittelpunkt verläuft und bei welchem der Träger (10) des Spiegels (20) oder der Träger des Werkstückes, einer in bezug auf den anderen gemäß einer vorher bestimmten Bewegung verschoben wird, die annähernd der gewünschten Bahn des Auftreffpunktes des Strahles auf dem Werkstück entspricht, dadurch gekennzeichnet, daß der Spiegel (20) auf seinem Träger (10) um eine weitere Drehachse (42) oder (40), die in dessen Ebene enthalten ist und die zuerst angeführte Achse (40) oder (42) in dem Mittelpunkt des Spiegels senkrecht kreuzt, schwenkbar montiert wird, eine Bewegung geringer Amplitude des Spiegels (20) um diese zwei Achsen bewirkt wird, und diese Bewegung geringer Amplitude der vorerwähnten Relativbewegung des Trägers (20) des Spiegels oder des Trägers des Werkstückes, überlagert wird, um die gewünschte genaue Bahn des Auftreffpunktes des Laserstahles auf dem Werksktück zu erhalten.

2. Verfahren nach Anspruch 1, dadurch gekennzeichnet, daß der Spiegel (20) durch magnetische Anziehung mittels eines Luftkissens in seinen Mittelpunkt reibungslos aufgehängt wird und seine Drehbewegung um die vorerwähnten Drehachsen (40, 42) durch Verändern des elektrischen Stromes gesteuert wird, der in Spulen (44) fließt, die auf dem Spiegel (20) in auf seinen Drehachsen (40, 42) liegenden Stellen befestigt sind und in einem stationären Magnetfeld liegen.

3. Einrichtung zum Verschieben des Auftreffpunktes eines Laserstrahles auf einem Werkstück, die einen Spiegel (20) zur Reflexion des Laserstrahles aufweist, wobei der Spiegel auf einem Träger (10) um eine Drehachse (40) oder (42) schwenkbar montiert ist, welche in dessen Ebene und durch dessen Mittelpunkt verläuft, und Mittel zum Verschieben des Trägers (10) des Spiegels (20) oder des Trägers des Werkstückes, einen in bezug auf den anderen, gemäß einer Bewegung, die annähernd der gewünschten Bahn des Auftreffpunktes des Laserstrahles auf dem Werkstück entspricht, dadurch gekennzeichnet, daß der Spiegel in bezug auf den Träger (10) um eine weitere Drehachse (42) oder (40) schwenkbar montiert ist, die in seiner Ebene, die zuerst angeführte Achse (40) oder (42) senkrecht in seinem Mittelpunkt schneidend enthalten ist und daß Mittel (44, 81) zum Verlagern des Spiegels (20) um diese zwei Achsen im Sinne einer Bewegung geringer Amplitude vorgesehen sind, wobei die Bewegung geringer Amplitude der vorerwähnten Relativbewegung des Trägers des Spiegels oder des Trägers des Werkstückes überlagert wird, um die gewünschte genaue Bahn des Auftreffpunktes des Laserstrahles auf dem Werkstück zu erhalten.

4. Einrichtung nach Anspruch 3, dadurch gekennzeichnet, daß der Spiegel (20) in seinem Mittelpunkt mit einem Kugelkopf (34) der Luftkissentyp-Aufhängung versehen ist, der einer magnetischen Anziehung unterworfen wird.

5. Einrichtung nach Anspruch 3 oder 4, dadurch gekennzeichnet, daß dem Spiegel (20) Mittel (68, 74) zugeordnet sind, welche seine Drehung um eine Achse (30) senkrecht auf die vorerwähnten Drehachsen (40, 42) verhindern.

6. Einrichtung nach einem der Ansprüche 3 bis 5, dadurch gekennzeichnet, daß der Spiegel (20) vier Arme (38) aufweist, die sich paarweise entlang der Drehachsen (40, 42) erstrecken, und auf denen Spulen (44) mit auf die Drehachsen senkrechten Achsen symmetrisch befestigt sind, wobei die Spulen in bezug auf feste, von dem Träger (10) des Spiegels getragene Anker (46) bewegbar sind.

7. Einrichtung nach Anspruch 6, dadurch gekennzeichnet, daß zwei Spulen (44), die auf derselben Drehachse des Spiegels montiert sind, gemeinsam in Gegenschaltung an einen elektrischen Steuerkreis geschaltet sind.

8. Einrichtung nach einem der Ansprüche 3 bis 7, dadurch gekennzeichnet, daß sie Mittel zum Messen des Drehwinkels des Spiegels um die vorerwähnten Achsen (40, 42) enthält.

9. Einrichtung nach Anspruch 8, dadurch gekennzeichnet, daß die Mittel zum Messen des Winkels Meßfühler (66) für eine Linearverschiebung sind, die einen beweglichen Teil enthalten, der entlang einer auf die zwei Drehachsen des Spiegels senkrechten Achse geführt ist und durch einen Stift (64) getragen wird, der sich axial durch eine Spule (44) erstreckt und mit dieser auf dem Spiegel (20) befestigt ist.

10. Einrichtung nach Anspruch 7, dadurch gekennzeichnet, daß der elektrische Steuerkreis einen Generator für analoge Funktionen (80) einschließt, der mit einem Korrekturnetzwerk (84), beispielsweise vom Typ PID verbunden ist.

11. Einrichtung nach einem der Ansprüche 3 bis 10, dadurch gekennzeichnet, daß sie Mittel zum dynamischen Auswuchten der beweglichen Einheit einschließt, die von dem Spiegel (20) und seinen Mitteln (44) zum Verlagern gebildet wird, wobei diese Mittel zum Auswuchten von einer beweglichen, zu der vorerwähnten beweglichen Einheit (20, 44) symmetrischen Einheit (92, 94) gebildet sind und Mittel zum Verschieben einschließen, die mit jenen des Spiegels (20) identisch sind, die jedoch diesen letzteren gegenüberliegend montiert sind.

## Claims

1. A method of displacing the point of impact of a laser beam on a part, the method consisting in directing the laser beam onto the part by means of a mirror (20) which is pivotally mounted on a support (10) about an axis (40) or (42) lying in its plane and passing through its center, and in displacing the mirror support (10) or the part support relative to each other with a predetermined motion corresponding approximately to the desired trajectory for the beam impact point on the part, the method being characterized in that it consists in mounting the mirror (20) to rotate relative to its support (10) about another rotary axis (42) or (40) lying in its plane and intersecting the first mentioned axis (40) or (42) perpendicularly at the center of the mirror, in determining a small amplitude motion of the mirror (20) about said two axes, and in superposing said small amplitude motion on said relative motion of the mirror support or the part support in order to obtain the desired precise trajectory of the point of impact of the laser beam on the part.

2. A method according to claim 1, characterized in that it consists in suspending the mirror (20) at its center by magnetic attraction and without friction by means of a cushion of air, and in controlling its rotary morion about said axes (40, 42) by varying an electric current flowing through coils (44) fixed to the mirror (20) at points situated on its rotary axes (40, 42) and placed in a fixed magnetic field.

3. A device for displacing the impact point of a laser beam on a part, the device comprising a mirror (20) for reflecting the laser beam, which mirror is pivotally mounted on a support (10) about an axis (40) or (42) lying in its plane and passing through its center, and means for displacing the mirror support (10) or the part support relative to each other with a motion corresponding approximately to the desired trajectory for the laser beam impact point on the part, the device being characterized in that the mirror is mounted to rotate, relative to its support (10), about another rotary axis (42) or (40) lying in its plane and intersecting the first-mentioned axis (40) or (42) perpendicularly at the center of the mirror, and in that means (44, 81) are provided for displacing the mirror (20) about said two axes with a small amplitude motion which is superposed to the above-specified relative motion of the mirror support or the part support in order to obtain the desired precise trajectory of the point of impact of the laser beam on the part.

4. A device according to claim 3, characterized in that the mirror (20) is provided at its center with a suspension pivot (34) of the air cushion type, which pivot is subjected to magnetic attraction.

5. A device according to claim 3 or 4, characterized in that the mirror (20) is associated with means (68, 74) preventing its rotation about an axis (30) perpendicular to said rotary axes (40, 42).

6. A device according to any one of claims 3 to 5, characterized in that the mirror (20) includes four arms (38) extending in pairs along the rotary axes (40, 42) and on which coils (42) are fixed symmetrically with their axes perpendicular to the axes of rotation, which coils are movable relative to fixed magnetic circuits (46) carried by the mirror support (10).

7. A device according to claim 6, characterized in that the two coils (44) mounted on a common rotary axis of the mirror are connected in opposition to an electric control circuit.

8. A device according to any one of claims 3 to 7, characterized in that it includes means for measuring the angles of rotation of the mirror about the said axes (40, 42).

9. A device according to claim 8, characterized in that the angle measuring means are linear displacement sensors (66) comprising a moving element guided along an axis which is perpendicular to the two rotary axes of the mirror and carried on a rod (64) which extends axially through one of said coils (44) and is fixed together therewith to the mirror (20).

10. A device according to claim 7, characterized in that the electric control circuit includes an analog function generator (80) associated with a corrector network (84) which is of the proportional-integral-derivative type, for example.

11. A device according to any one of claims 3 to 10, characterized in that it includes dynamic balancing means for the moving assembly constituted by the mirror (20) and its displacement means (44), said balancing means being constituted by a moving assembly (92, 94) which is symmetrical to the said moving assembly (20, 44) and including displacement means identical to those for the mirror (20), but connected in opposition relative thereto.

## FIG. 1

FIG. 2

FIG. 3

FIG. 4

$$\int_{e}^{e} e \, dt$$
$$de / dt$$

FIG. 5

FIG.6